# EUROPÄISCHE PATENTSCHRIFT

(11) **EP 3 494 009 B1**
(45) Veröffentlichungstag und Bekanntmachung des Hinweises auf die Patenterteilung: **18.05.2022**
(21) Anmeldenummer: 17771327.8
(22) Anmeldetag: 03.08.2017
(51) Int. Cl.: B60Q 1/26, B60Q 1/28, F21S 43/14, F21S 43/19, F21S 43/237, F21S 43/241, F21S 43/249

(54) **KRAFTFAHRZEUGSCHEINWERFER UND VERFAHREN ZUR BETÄTIGUNG DES SCHEINWERFERS**
VEHICLE HEADLIGHT AND METHOD FOR ACTIVATING THE HEADLIGHT
PROJECTEUR DE VÉHICULE À MOTEUR ET PROCÉDÉ POUR ACTIONNER LE PROJECTEUR

(30) Priorität: 05.08.2016 CZ 20160474
(43) Veröffentlichungstag der Anmeldung: 12.06.2019
(73) Patentinhaber: Skoda Auto a.s., 29301 Mladá Boleslav (CZ)
(72) Erfinder: CIMRMAN, Radek, 29401 Bakov nad Jizerou (CZ); VANIK, Frantisek, 29301 Mladá Boleslav (CZ); CERNY, Pavel, 25066 Zdiby (CZ); PROKOP, Filip, 16500 Praha (CZ)
(86) Internationale Anmeldenummer: PCT/CZ2017/000050
(87) Internationale Veröffentlichungsnummer: WO 2018/024264

(56) Entgegenhaltungen:
- EP-A1- 2 808 201
- EP-A1- 2 851 718
- DE-A1-102004 014 900
- DE-A1-102006 059 980
- DE-A1-102014 015 777
- DE-A1-102014 016 334
- DE-U1-202012 004 747
- DE-U1-212011 100 156
- FR-A1- 3 002 895
- US-A1- 2007 019 429
- US-A1- 2012 280 528

## Beschreibung

### Technisches Gebiet

Die Erfindung betrifft einen in der Fahrzeugkarosserie eingebauten Kraftfahrzeugscheinwerfer, insbesondere einen Scheinwerfer mit der Anlage für die Begrüßungsfunktion mit einer Leuchtanimation der Design-Pins.

### Bisheriger Stand der Technik

Aus der FR 3 002 895 A1 ist eine Vorrichtung zum Anzeigen eines Richtungswechsels eines Fahrzeugs bekannt.

Aus der EP 2 851 718 A1 ist eine Beleuchtungseinrichtung eines Kraftfahrzeugs bekannt.

Aus der DE 20 2012 004 747 U1 ist ein elektronisches System zum Steuern eines Automobil-LED-Array-Fahrtrichtungsanzeigers bekannt.

Aus der DE 21 2011 100156 U1 ist ein Kraftfahrzeugscheinwerfer bekannt.

Aus der DE 10 2006 059 980 A1 ist eine Leuchteinheit für einen Kraftwagen bekannt.

Aus der DE 10 2014 016 334 A1 ist eine Beleuchtungsvorrichtung für eine Außenlichtfunktion eines Kraftfahrzeugs und ein Verfahren zur Ansteuerung einer derartigen Beleuchtungsvorrichtung bekannt.

Derzeit werden bei Kraftfahrzeugen die Funktionen Coming Home und Leaving Home eingesetzt, bei denen neben anderem die Außenbeleuchtung des Fahrzeuges, z.B. Abblendlicht oder Standlicht, ein- oder ausgeschaltet wird.

Die Funktionen "Coming Home" und "Leaving Home" stellen eine Komfortsteigerung der Fahrzeugumgebungsbeleuchtung dar. Beim Verlassen des Fahrzeuges werden das Abblendlicht, die Umfeldleuchten in den Außenspiegelgehäusen, das Schlusslicht der Heckleuchten und die Kennzeichenbeleuchtung verzögert ausgeschaltet (Coming Home) bzw. eingeschaltet, wenn der Fahrer mit der Funkfernbedienung die Verriegelung der Türen öffnet (Leaving Home). So kann die Fahrzeugaußenbeleuchtung genutzt werden, um bei Dunkelheit den Weg zur Haustür bzw. den Weg zum Fahrzeug zu beleuchten. Die Leuchtdauer der Fahrzeugbeleuchtung kann im Fahrzeug eingestellt werden.

Die Funktion Coming Home wird typischerweise wie folgt realisiert:
- Die Beleuchtung schaltet sich automatisch beim Öffnen der Fahrertür ein (in der Regel binnen 60 Sekunden nach der Abschaltung der Zündung).
- Die Beleuchtung schaltet 10 Sekunden nach dem Schließen aller Türen und der Heckklappe, bzw. nach Ablauf der eingestellten Verzögerungszeit ab.
- Bleibt eine der Türen oder die Heckklappe offen, schaltet sich die Beleuchtung nach 60 Sekunden aus.

Die Funktion Leaving Home wird typischerweise wie folgt realisiert:
- Die Beleuchtung schaltet sich automatisch ein, wenn die Verriegelung der Türen mit der Funkfernbedienung geöffnet wird.
- Die Beleuchtung schaltet sich nach 10 Sekunden bzw. nach Ablauf der eingestellten Verzögerungszeit oder nach der Verriegelung des Fahrzeuges aus.
- Werden keine der Türen geöffnet, wird das Fahrzeug nach 30 s automatisch wieder verriegelt.

Beide Funktionen, einschließlich der Verzögerungszeit, werden direkt im Fahrzeug, beispielsweise über den Berührungsbildschirm an der Schalttafel, aktiviert oder deaktiviert.

Der Nachteil des bestehenden Standes der Technik liegt darin, dass die Funktionen Coming Home und Leaving Home nur die genannten Leuchtfunktionen (Außenbeleuchtung) ohne weitere Effekte einschalten, die dem Fahrzeug mehr Emotionalität verleihen und ein Effekt des aufwachenden Fahrzeuges bei der Entriegelung oder sich verabschiedenden Fahrzeuges bei der Verriegelung darstellen würden.

### Darstellung der Erfindung

Die genannten Nachteile werden durch das Kraftfahrzeug nach Anspruch 1 und das Verfahren nach Anspruch 6 gelöst. Vorteilhafte Ausgestaltungen der Erfindung sind in den abhängigen Ansprüchen angegeben.

Der Fahrzeugscheinwerfer erkennt die Aktivierung der Funktion Coming Home und Leaving Home und vor oder während der eigentlichen Aktivierung des Abblendlichts, eventuell weiterer Leuchten, schalten sich die am unteren Rahmen des Scheinwerfers angeordneten Design-Pins nach und nach auf und aus, die im Normalbetrieb als zusätzliches Standlicht genutzt werden können.

Dieser Leuchteffekt verleiht dem Fahrzeug mehr Emotionalität und stellt den Effekt des aufwachenden Fahrzeuges bei der Entriegelung oder sich verabschiedenden Fahrzeuges bei der Verriegelung dar.

Der im Frontend der Karosserie eingebaute Fahrzeugscheinwerfer umfasst eine oder mehrere Lichtquellen - für die Funktionen des Abblendlichtes, des Fernlichtes, des Standlichtes, der Nebelscheinwerfer, der Blinker usw. Zu diesen in Kraftfahrzeugen verwendeten Lichtquellen gehört beispielsweise die Glühlampe mit Metall-Faden, Halogenglühlampe, Gasentladungslampe (beispielsweise Xenon), Neonlampe, Leuchtdiode und Leuchtstofflampe. Ferner umfasst der Scheinwerfer einen unteren Rahmen und eine Glasabdeckung.

An dem unteren Rahmen des Scheinwerfers ist die Anlage mit der Funktion der Lichtanimation angeordnet. Die Anlage mit der Funktion der Lichtanimation besteht aus einem oder mehreren Design-Pins und einer Leiterplatte mit Lichtquellen für jeden der Design-Pins und einer elektronischen Steuereinrichtung für separates Aufleuchten der einzelnen Design-Pins.

Der Design-Pin ist ein nadel- oder röhrenförmiges Bauteil aus durchsichtigem Material und funktioniert als ein Lichtleiter, der das Licht entlang seiner ganzen Länge ausstrahlt und jeweils von einer Lichtquelle eingespeist wird, was in der Regel eine an der Leiterplatte integrierte LED ist.

Die elektronische Steuereinrichtung für das separate Aufleuchten einzelner Design-Pins umfasst eine Steuereinheit.

Die Anlage mit der Funktion der Lichtanimation ist mit der Anlage für die Funktion Coming Home und/oder Leaving Home verbunden. Dies bedeutet, dass die Steuereinheit der Anlage für die Lichtanimation abhängig von dem Zustand der Steuereinheit der Funktion Coming Home und Leaving Home aktivierbar ist.

Das Verfahren zur Betätigung des Fahrzeugscheinwerfers umfasst folgende Schritte:
- Aktivierung der Funktion Coming Home und Leaving Home,
- Aktivierung des sukzessiven Aufleuchtens und/oder Erlöschens der Design-Pins.

### Übersicht der Figuren der Zeichnungen

Die Erfindung wird näher anhand der Ausführungsbeispiele gemäß der beigefügten Zeichnung 1 erläutert, in der eine perspektivische Ansicht des Scheinwerfers nach der Erfindung dargestellt ist.

### Ausführungsbeispiel der Erfindung

Ein im Frontend der Karosserie eingebauter Kraftfahrzeugscheinwerfer 1 umfasst eine oder mehrere Lichtquellen - für die Funktionen des Abblendlichtes, des Fernlichtes, des Standlichtes, der Nebelscheinwerfer, der Blinker usw. Zu diesen in Kraftfahrzeugen verwendeten Lichtquellen gehört beispielsweise die Glühlampe mit Metall-Faden, Halogenglühlampe, Gasentladungslampe (beispielsweise Xenon), Neonlampe, Leuchtdiode und Leuchtstofflampe. Der Scheinwerfer 1 umfasst ferner einen unteren Rahmen 2 und eine Glasabdeckung 3.

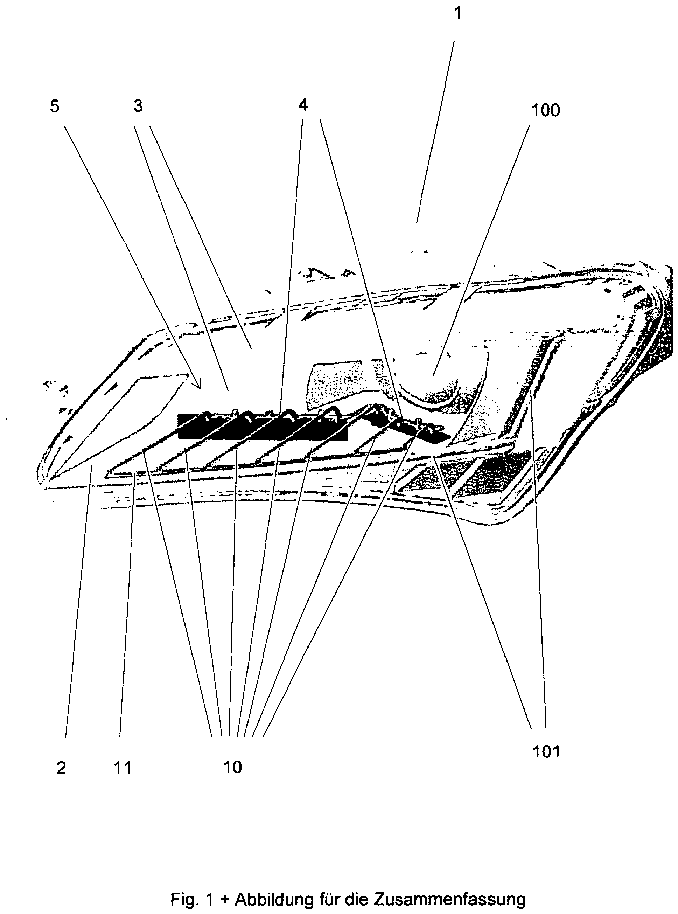

Der in Fig. 1 dargestellte Kraftfahrzeugscheinwerfer 1 befindet sich in der Frontansicht rechts am Fahrzeug. Der linke Scheinwerfer (nicht dargestellt) ist spiegelbildlich angeordnet.

Die Fig. 1 zeigt die Ausführung mit einer Lichtquelle 100 in Form einer Halogenglühlampe oder Xenonleuchte, mit der Funktion des Abblend- und Fernlichtes und LED 101 in Form des Buchstabens L mit der Funktion des Standlichtes. Diese innere Konstruktion der Lichtquellen und deren Funktionen, wie in Fig. 1 dargestellt, sind nur beispielhaft und haben auf die Darstellung der Erfindung keinen Einfluss.

Am unteren Rahmen 2 des Scheinwerfers 1 ist die Anlage mit der Funktion der Lichtanimation 5 angeordnet. Die Anlage mit der Funktion der Lichtanimation 5 besteht aus einem oder mehreren Design-Pins 10 und einer Leiterplatte 4 mit Lichtquellen (in Fig. 1 nicht dargestellt) für jedes Design-Pin 10 sowie eine elektronische Steuereinrichtung für separates Aufleuchten einzelner Design-Pins 10 (in Fig. 1 nicht dargestellt).

Die Design-Pins 10 sind nadel- oder röhrenförmige Bauteile aus durchsichtigem Material und funktionieren als Lichtleiter, die das Licht entlang ihrer ganzen Länge ausstrahlen und jeweils von einer Lichtquelle je Design-Pin 10 eingespeist werden, was in bevorzugter Ausführung die an einer Leiterplatte 4 angebrachten LEDs sind. Die Lichtquellen bzw. LEDs liegen an die Design-Pins 10 an, oder können auch in die Design-Pins 10 integriert werden. Die Design-Pins 10 sind im Wesentlichen in der Richtung der Kraftfahrzeuglängsachse bzw. übereinstimmend mit der Fahrtrichtung 20 angeordnet, am unteren Designrahmen 2 dann etwa senkrecht zur Leiterplatte 5 oder in einem Winkel in der Größenordnung von einigen oder einigen zehn Grad. Wie die Fig. 1 zeigt, können die Enden der Design-Pins 10 mit einem Design-Querbalken 11 verbunden werden, und zwar aus Designgründen oder wegen besserer Beleuchtungseffizienz. Aus diesem Grund werden die Pins 10, 11 nach vorliegender Erfindung als Design-Pins bezeichnet.

Die Fig. 1 zeigt die Leiterplatte 4, die aus zwei Bauteilen besteht, welche mit elektronischer Leitung (in Fig. 1 nicht dargestellt) verbunden sind. Die Leiterplatte 4 kann aus einem oder mehreren nebeneinander angeordneten Bauteilen bestehen. In der Fig. 1 sind sieben Design-Pins 10 dargestellt. Es kann nach der vorliegenden Erfindung ein bis zu in Größenordnung einige oder einige zehn sein.

Die an der Leiterplatte angeordnete elektronische Steuereinrichtung für separates Aufleuchten einzelner Design-Pins umfasst eine Steuereinheit.

Die Anlage mit der Funktion der Lichtanimation 5 ist mit der Anlage für die Funktion Coming Home und/oder Leaving Home verbunden. Dies bedeutet, dass die Steuereinheit der Anlage für die Lichtanimation 5 abhängig von dem Zustand der Steuereinheit der Funktion Coming Home und Leaving Home aktivierbar ist.

Das Verfahren zur Betätigung des Kraftfahrzeugscheinwerfers nach vorliegender Erfindung umfasst folgende Schritte:
- Zuerst wird die Funktion Coming Home und/oder Leaving Home aktiviert, d.h. die Beleuchtung schaltet sich automatisch nach dem Öffnen der Fahrertür ein (in der Regel binnen 60 Sekunden nach der Abschaltung der Zündung) oder die Beleuchtung schaltet sich automatisch ein, wenn die Verriegelung der Türen mit der Funkfernbedienung geöffnet wird
- Aktivierung des sukzessiven Aufleuchtens und/oder Erlöschens der Design-Pins. Diese Betriebsart dauert während der gesamten Zeit der Aktivierung der Funktion Coming Home und/oder Leaving Home.

Die elektronische Steuereinrichtung des Kraftfahrzeugscheinwerfers erkennt die Aktivierung der Funktion Coming Home und Leaving Home und vor oder während der eigentlichen Aktivierung des Abblendlichtes leuchten die Design-Pins 10 sukzessiv auf bzw. erlöschen. Die Design-Pins 10 können im Normalbetrieb des Kraftfahrzeuges auch als zusätzliches Standlicht genutzt werden. Dies bedeutet, wenn beim Normalbetrieb - also während der Fahrt oder beim Stillstand - die Funktion Coming Home und Leaving Home nicht aktiviert ist, leuchten diese zusammen mit dem standardmäßigen Standlicht.

Bei der Aktivierung des sukzessiven Aufleuchtens und/oder Erlöschens der Design-Pins 10 leuchten die einzelnen Design-Pins 10 oder Pins-Gruppen von rechts nach links oder von links nach rechts auf. Diese können zum Beispiel bei der Entriegelung des Fahrzeuges sukzessiv und wiederkehrend in Fahrzeugauswärtsrichtung und bei der Verriegelung in Fahrzeugeinwärtsrichtung aufleuchten. Wenn der Scheinwerfer 1 nur einen Design-Pin 10 aufweist, dann blinkt dieser nur.

Dieser Leuchteffekt verleiht dem Fahrzeug mehr Emotionalität und stellt den Effekt des aufwachenden Fahrzeuges bei der Entriegelung oder sich verabschiedenden Fahrzeuges bei der Verriegelung des Kraftfahrzeuges dar.

### Bezugszeichenliste

- 1.: Scheinwerfer
- 2.: unterer Rahmen
- 3.: Glasabdeckung
- 4.: Leiterplatte
- 5: Anlage mit der Funktion der Lichtanimation

- 10.: Design-Pins
- 11.: Design-Pin

- 20: Fahrtrichtung des Fahrzeuges

- 100.: Lichtquelle
- 101.: Lichtquelle

## Patentansprüche

1. Kraftfahrzeug mit mindestens einem Scheinwerfer (1), wobei der mindestens eine Scheinwerfer (1) im Frontend der Karosserie des Kraftfahrzeugs eingebaut ist, wobei in dem mindestens einen Scheinwerfer (1) eine oder mehrere Lichtquellen (100, 101) angeordnet sind und der mindestens eine Scheinwerfer (1) einen unteren Rahmen (2) und eine Glasabdeckung (3) umfasst, wobei an dem unteren Rahmen (2) des mindestens einen Scheinwerfers (1) eine Anlage mit einer Funktion der Lichtanimation (5) angeordnet ist, **dadurch gekennzeichnet, dass** die Anlage mit der Funktion der Lichtanimation (5) aus einem oder mehreren Design-Pins (10, 11) und einer Leiterplatte (4) mit Lichtquellen für jeden der Design-Pins (10, 11) sowie einer elektronischen Steuereinrichtung für separates Aufleuchten der einzelnen Design-Pins besteht.

2. Kraftfahrzeug nach Anspruch 1, **dadurch gekennzeichnet, dass** der Design-Pin bzw. die Design-Pins (10, 11) aus einem durchsichtigen Material als Lichtleiter ausgeführt sind und mit seinem Ende bzw. ihren Enden an die Lichtquellen angeschlossen sind.

3. Kraftfahrzeug nach vorgenannten Ansprüchen, **dadurch gekennzeichnet, dass** die elektronische Steuereinrichtung für das separate Aufleuchten einzelner Design-Pins eine Steuereinheit umfasst.

4. Kraftfahrzeug nach vorgenannten Ansprüchen, **dadurch gekennzeichnet, dass** die Lichtquellen als LEDs ausgeführt sind.

5. Kraftfahrzeug nach vorgenannten Ansprüchen, **dadurch gekennzeichnet, dass** die Anlage mit der Funktion der Lichtanimation elektronisch mit einer Anlage für eine Funktion Coming Home und/oder Leaving Home verbunden ist.

6. Verfahren zur Betätigung des mindestens einen Scheinwerfers (1) für das Frontend der Karosserie eines Kraftfahrzeuges nach vorgenannten Ansprüchen mit folgenden Schritten:
- Aktivierung einer Funktion Coming Home und Leaving Home nach dem Offnen der Fahrertür oder nach der Entriegelung der Türen mit einer Funkfernbedienung,
- Aktivierung eines sukzessiven Aufleuchtens und/oder Erlöschens der Design-Pins während der Zeit einer Aktivierung der Funktion Coming Home und Leaving Home.

7. Verfahren nach Anspruch 6
**dadurch gekennzeichnet, dass** die Design-Pins (10, 11) im Normalbetrieb des Kraftfahrzeuges eine Funktion des zusätzlichen Standlichtes erfüllen.

## Claims

1. A motor vehicle with at least one headlight (1), wherein the at least one headlight (1) is installed in the front end of the body of the motor vehicle, wherein one or more light sources (100, 101) are arranged in the at least one headlight (1) and the at least one headlight (1) comprises a bottom frame (2) and a glass cover (3), wherein a system with a function of the light animation (5) is arranged on the bottom frame (2) of the at least one headlight (1), **characterized in that** the system with the function of the light animation (5) consists of one or more design pins (10, 11) and a circuit board (4) with light sources for each of the design pins (10, 11) as well as an electronic control device for separately lighting up the individual design pins.

2. The motor vehicle according to claim 1, **characterized in that** the design pin or the design pins (10, 11) are designed as light guides made of a transparent material and are connected with its end or their ends to the light sources.

3. The motor vehicle according to the aforementioned claims, **characterized in that** the electronic control device comprises a control unit for separately lighting up individual design pins.

4. The motor vehicle according to the aforementioned claims, **characterized in that** the light sources are designed as LEDs.

5. The motor vehicle according to the aforementioned claims, **characterized in that** the system with the function of the light animation is electronically connected to a system for a Coming Home and/or Leaving Home function.

6. A method for actuating the at least one headlight (1) for the front end of the body of a motor vehicle according to the aforementioned claims having the following steps:
- Activation of a Coming Home and Leaving Home function after the opening of the driver's door or after the unlocking of the doors with a wireless remote control,
- Activation of a successive lighting up and/or extinguishing of the design pins during the time of an activation of the Coming Home and Leaving Home function.

7. The method according to claim 6,
**characterized in that** the design pins (10, 11) in the normal operation of the motor vehicle fulfill a function of the additional parking light.

## Revendications

1. Véhicule automobile avec au moins un projecteur (1), l'au moins un projecteur (1) étant monté dans l'extrémité frontale de la carrosserie du véhicule automobile, une ou plusieurs sources de lumière (100, 101) étant disposées dans l'au moins un projecteur (1), et l'au moins un projecteur (1) comprenant un cadre (2) inférieur et un couvercle en verre (3), une installation avec une fonction d'animation lumineuse (5) étant disposée sur le cadre (2) inférieur de l'au moins un projecteur (1), **caractérisé en ce que** l'installation avec la fonction d'animation lumineuse (5) se compose d'un ou de plusieurs design pins (10, 11) et d'un circuit imprimé (4) avec des sources de lumière pour chacun des design pins (10, 11) ainsi que d'un dispositif de commande électronique pour l'allumage séparé des différents design pins.

2. Véhicule automobile selon la revendication 1, **caractérisé en ce que** le design pin ou respectivement les design pins (10, 11) sont réalisés dans un matériau transparent en tant que guide de lumière et sont connectés par son extrémité ou respectivement par leurs extrémités aux sources de lumière.

3. Véhicule automobile selon les revendications citées, **caractérisé en ce que** le dispositif de commande électronique comprend une unité de commande pour l'allumage séparé de différents design pins.

4. Véhicule automobile selon les revendications citées, **caractérisé en ce que** les sources de lumière sont réalisées en tant que LED.

5. Véhicule automobile selon les revendications citées, **caractérisé en ce que** l'installation avec la fonction d'animation lumineuse est connectée électroniquement à une installation pour une fonction Coming Home et/ou Leaving Home.

6. Procédé destiné à l'actionnement de l'au moins un projecteur (1) pour l'extrémité frontale de la carrosserie d'un véhicule automobile selon les revendications citées, ayant les étapes suivantes :
- activation d'une fonction Coming Home et/ou Leaving Home après l'ouverture de la porte du conducteur ou après le déverrouillage des portes avec une télécommande radio,
- activation d'un allumage progressif et/ou d'une extinction progressive des design pins pendant la période d'activation de la fonction Coming Home et Leaving Home.

7. Procédé selon la revendication 6, **caractérisé en ce que** les design pins (10, 11) réalisent, pendant le fonctionnement normal du véhicule automobile, une fonction de feu de position supplémentaire.
